# FASCICULE DE BREVET EUROPEEN

(11) **EP 0 696 687 B1**
(45) Date de publication et mention de la délivrance du brevet: **17.11.1999**
(21) Numéro de dépôt: 95420224.8
(22) Date de dépôt: 01.08.1995
(51) Int. Cl.: F16B 45/02

(54) **Mousqueton à verrouillage dynamique**
Karabinerhaken mit dynamischer Verriegelung
Snap hook with dynamic locking

(30) Priorité: 12.08.1994 FR 9410127
(43) Date de publication de la demande: 14.02.1996
(73) Titulaire: ETABLISSEMENTS LUDGER SIMOND, F-74400 Chamonix Mont Blanc (FR)
(72) Inventeur: Simond, Ludger, F-74400 Chamonix Mont Blanc (FR)
(74) Mandataire: Poncet, Jean-François

(56) Documents cités:
- EP-A- 0 581 693
- EP-A- 0 606 808
- WO-A-88/03826
- FR-A- 997 540
- FR-A- 2 598 090

## Description

La présente invention concerne les mousquetons généralement utilisés pour la pratique de l'alpinisme, de la spéléologie ou d'autres activités similaires.

Les mousquetons généralement utilisés à ce jour ont une forme générale d'anneau fermé allongé, constitué d'un corps ayant la forme générale d'un C dont les deux extrémités sont recourbées l'une vers l'autre et séparées par un espace d'ouverture, et d'un doigt dont une première extrémité est articulée sur une première extrémité du corps selon un axe transversal pour pivoter dans un plan de pivotement entre une position ouverte pivotée vers l'intérieur du corps et une position fermée dans laquelle la seconde extrémité du doigt s'engage sur la seconde extrémité du corps pour fermer l'espace d'ouverture. Les secondes extrémités respectives du corps et du doigt sont conformées selon des formes complémentaires, respectivement une forme d'extrémité mâle et une forme d'extrémité femelle, conformées pour s'encastrer l'une dans l'autre en fin de mouvement de fermeture dans le plan de pivotement, et les formes complémentaires sont adaptées pour limiter la progression du doigt vers l'extérieur au-delà de sa position de fermeture, assurant ainsi une possibilité de tenue du mousqueton lors d'un effort de traction transversale.

Des réalisations connues de mousqueton sont décrites par exemple dans les documents WO-A-88 03826 ou EP-A-0 606 808.

Pour assurer une bonne tenue lors d'une traction longitudinale, les figures 1 et 2 du document WO-A-88 03826 enseignent d'utiliser des formes complémentaires en crochet, par exemple une forme d'extrémité de doigt ou de corps en crochet engagée sur une traverse d'extrémité de corps ou de doigt. Ces formes limitent l'écartement axial des secondes extrémités respectives du corps et du doigt lors d'une déformation sous contrainte de traction axiale du corps de mousqueton.

Toutefois cette forme en crochet constitue une partie agressive, susceptible de blesser les doigts de l'utilisateur, de détériorer une corde ou une sangle, ou de gêner le passage d'une sangle ou d'une corde lors de leur introduction ou de leur extraction hors du mousqueton.

Pour éviter les risques résultant de la présence d'une telle forme en crochet, les autres figures du document WO-A-88 03826, et le document EP-A-0 606 808, prévoient une extrémité de corps à section longitudinale en T avec deux protubérances latérales se développant latéralement dans une direction perpendiculaire au plan de pivotement du doigt, ladite extrémité de corps s'engageant à faible jeu dans une encoche de forme similaire en T de l'extrémité de doigt, l'encoche comportant ainsi des logements latéraux dans lesquels s'engagent les protubérances latérales de corps en position de fermeture du mousqueton. Les logements latéraux sont conformés pour s'opposer à tout déplacement axial relatif des protubérances latérales de corps engagées dans les logements, pour interdire tout écartement axial relatif des secondes extrémités respectives de corps et de doigt lors d'une contrainte axiale sur le mousqueton. Simultanément, les logements latéraux autorisent en permanence le déplacement relatif des protubérances dans le sens de l'ouverture du doigt.

On connaît également des structures de crochet de levage, telles que décrites par exemple dans le document EP-A-0 002 396, dans lesquelles l'extrémité du doigt comporte deux branches latérales formant un T, l'extrémité en T du doigt s'engageant dans une fente en T de l'extrémité du corps de crochet.

De telles structures des documents EP-A-0 606 808 ou WO-A-88 03826 présentent l'inconvénient de ne pas permettre une fonction de verrouillage antiouverture lors d'une contrainte exercée axialement sur le corps du crochet de levage.

Une telle fonction de verrouillage antiouverture sous contrainte est un problème spécifique des mousquetons utilisés pour la pratique de l'alpinisme ou de spéléologie. La raison est qu'un risque d'ouverture se produit par exemple lors de l'utilisation du mousqueton passé dans un anneau de piton ou d'autres dispositifs d'amarrage, lorsque le doigt se trouve à proximité d'une paroi : si les efforts exercés sur les cordes passées dans le mousqueton forcent le doigt contre la paroi, celui-ci est sollicité à l'ouverture vers l'intérieur du mousqueton ; lorsque le doigt pivote vers l'ouverture, il n'assure alors plus la fonction de tenue des efforts axiaux, qui sont repris seulement par le corps de mousqueton, ce qui diminue la capacité de tenue des efforts du mousqueton. Il est ainsi utile d'empêcher une telle ouverture du doigt de mousqueton, particulièrement dans un tel cas où le corps de mousqueton est soumis à un effort de traction axiale.

Le problème proposé par la présente invention est de concevoir une nouvelle structure de mousqueton qui, tout en évitant d'avoir recours à une partie en crochet agressive, assure à la fois une bonne tenue axiale et un verrouillage antiouverture sous contrainte.

On cherche également à augmenter la résistance mécanique du mousqueton, sans augmenter son poids.

La solution selon l'invention doit être compatible avec les structures de corps et de doigt de mousqueton présentant une section transversale sensiblement constante, telles qu'elles sont utilisées pour la pratique de l'alpinisme et de la spéléologie, permettant ainsi un retournement aisé du mousqueton dans un anneau d'amarrage.

Le mousqueton de l'invention doit en outre être facile à réaliser, par des usinages simples.

Pour atteindre ces objets ainsi que d'autres, un mousqueton selon l'invention comprend :
- un corps ayant la forme générale d'un C dont les deux extrémités sont recourbées l'une vers l'autre et séparées par un espace d'ouverture,
- un doigt dont une première extrémité est articulée sur une première extrémité du corps selon un axe transversal, pour pivoter dans un plan de pivotement entre une position ouverte et une position fermée dans laquelle la seconde extrémité du doigt s'engage sur la seconde extrémité du corps pour fermer l'espace d'ouverture,
- les secondes extrémités respectives du corps et du doigt étant conformées selon des formes complémentaires, respectivement une forme d'extrémité mâle et une forme d'extrémité femelle conformées pour s'encastrer l'une dans l'autre en fin de mouvement de fermeture dans le plan de pivotement,
- la première des formes d'extrémité comprenant au moins une protubérance latérale, se développant latéralement dans une direction sensiblement perpendiculaire au plan de pivotement du doigt, et s'engageant dans un logement latéral de la seconde des formes d'extrémité,
- ledit logement latéral étant conformé pour autoriser le libre déplacement relatif radial de la protubérance latérale correspondante lors du mouvement relatif de pivotement du doigt en l'absence de contrainte axiale appliquée sur le mousqueton et pour limiter au dessous d'une valeur maximale prédéterminée le déplacement axial relatif de la protubérance latérale correspondante lors d'une déformation sous contrainte de traction axiale du corps de mousqueton ;
selon l'invention :
- ledit logement latéral est conformé pour autoriser un léger déplacement axial relatif de la protubérance latérale correspondante lors d'une déformation sous contrainte de traction axiale du corps de mousqueton, et est conformé pour interdire le déplacement relatif radial de la protubérance latérale correspondante dans la direction d'ouverture du doigt lorsque la protubérance latérale correspondante s'est déplacée selon ledit léger déplacement axial relatif sous l'effet de la contrainte de traction axiale appliquée au corps de mousqueton.

Selon un premier mode de réalisation, la protubérance latérale est ménagée sur la forme d'extrémité mâle, et s'engage dans un logement correspondant ménagé dans la forme d'extrémité femelle.

De préférence, dans ce cas, la protubérance latérale a une profondeur réduite, inférieure au dixième du diamètre de section transversale du corps de mousqueton. La forme ainsi obtenue évite toute agressivité vis-à-vis des cordes, sangles ou doigts lors de l'utilisation.

Selon un autre mode de réalisation, la protubérance latérale est ménagée dans la forme d'extrémité femelle, et s'engage dans un logement correspondant ménagé sur la forme d'extrémité mâle.

En pratique, on utilisera avantageusement, dans la première des formes d'extrémité, deux protubérances latérales opposées, se développant latéralement de part et d'autre et s'engageant dans deux logements latéraux opposés de la seconde des formes d'extrémité.

D'autres objets, caractéristiques et avantages de la présente invention ressortiront de la description suivante de modes de réalisation particuliers, faite en relation avec les figures jointes, parmi lesquelles:
- la figure 1 illustre un mousqueton selon l'invention, en position ouverte ;
- la figure 2 illustre un mousqueton selon l'invention en position fermée, en l'absence de contrainte de traction axiale ;
- la figure 3 illustre un mousqueton selon l'invention en position fermée, en présence d'une contrainte de traction axiale ;
- la figure 4 est une vue partielle depuis l'intérieur de la zone de liaison entre les secondes extrémités de doigt et de corps, selon un premier mode de réalisation de l'invention ;
- la figure 5 est une vue de côté en coupe longitudinale selon le plan A-A de la figure 6 ;
- la figure 6 est une vue depuis l'extérieur de la zone de liaison entre les secondes extrémités de doigt et de corps, dans le mode de réalisation de la figure 4 ;
- la figure 7 est une vue similaire de celle de la figure 5, dans le cas où le corps de mousqueton est soumis à une contrainte de traction axiale ;
- les figures 8 à 11 sont similaires respectivement des figures 4 à 7, dans un second mode de réalisation de mousqueton selon l'invention ; et
- les figures 12 à 15 sont des vues similaires des figures 4 à 7 respectivement, dans un troisième mode de réalisation de mousqueton selon l'invention.

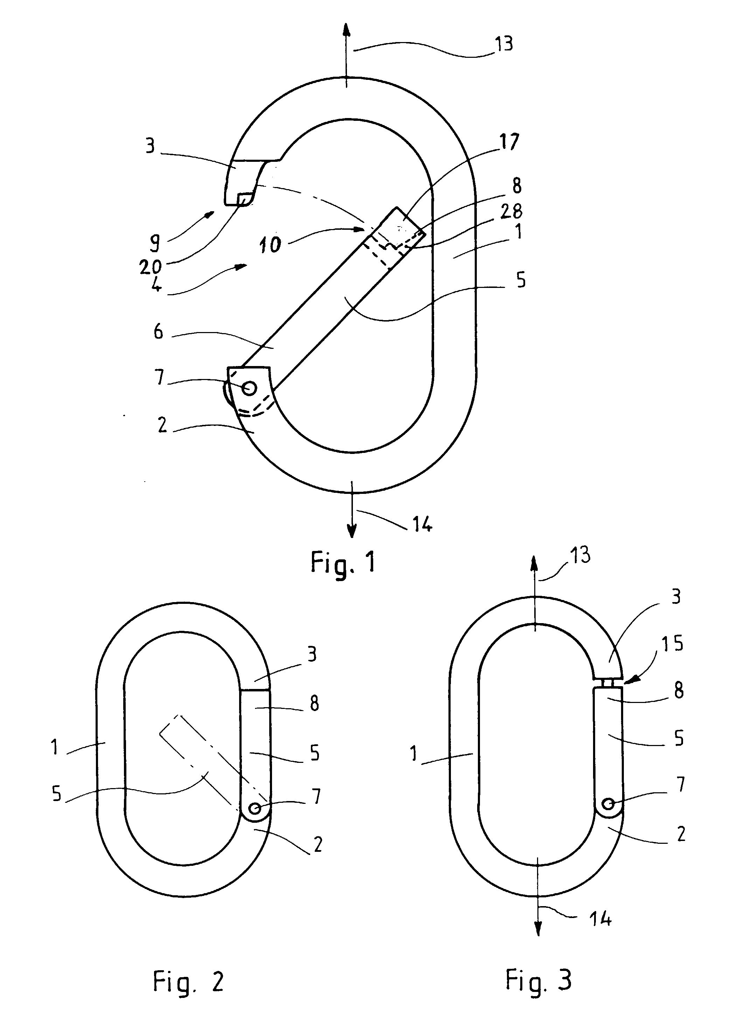

Dans le mode de réalisation illustré sur les figures 1 à 3, le mousqueton comprend un corps 1 ayant la forme générale d'un C dont les deux extrémités 2 et 3 sont recourbées l'une vers l'autre et séparées par un espace d'ouverture 4. Un doigt 5 est articulé à sa première extrémité 6 sur la première extrémité 2 du corps 1 selon un axe transversal 7, pour pivoter dans un plan de pivotement entre une position ouverte illustrée sur la figure 1 et une position fermée illustrée sur la figure 2 dans laquelle la seconde extrémité 8 du doigt s'engage sur la seconde extrémité 3 du corps 1 pour fermer l'espace d'ouverture 4.

Les secondes extrémités respectives 3 et 8 du corps 1 et du doigt 5 sont conformées selon des formes complémentaires, respectivement une forme d'extrémité mâle 9 et une forme d'extrémité femelle 10, conformées pour s'encastrer l'une dans l'autre en fin de mouvement de fermeture dans le plan de pivotement. On peut indifféremment disposer la forme d'extrémité mâle 9 sur la seconde extrémité 8 du doigt 5 ou sur la seconde extrémité 3 du corps 1, en prévoyant la forme d'extrémité femelle 10 sur l'autre seconde extrémité opposée du corps 1 ou du doigt 5.

Le doigt 5 est de préférence rappelé en position fermée par des moyens élastiques disposés au voisinage de l'articulation du doigt 5 autour de l'axe transversal 7.

Sur la figure 2, en l'absence d'une traction axiale exercée sur le mousqueton selon l'invention, le doigt 5 peut pivoter librement entre une position fermée illustrée en traits pleins et une position ouverte illustrée en traits mixtes.

En présence d'une traction axiale sur le mousqueton selon l'invention, comme illustré par les flèches 13 et 14 sur la figure 3, le corps 1 tend à s'allonger, de sorte que les secondes extrémités respectives 3 et 8 du corps 1 et du doigt 5 tendent à s'écarter l'une de l'autre selon un déplacement axial relatif, comme illustré par l'espacement 15. Dans cette position, le doigt 5 du mousqueton selon l'invention ne peut plus pivoter vers sa position ouverte, son pivotement étant empêché par des moyens de verrouillage dynamiques illustrés par les figures suivantes. En outre, les formes d'extrémité mâle 9 et femelle 10 sont conformées pour limiter au dessous d'une valeur maximale prédéterminée le déplacement axial relatif des secondes extrémités 3 et 8 du corps 1 et du doigt 5.

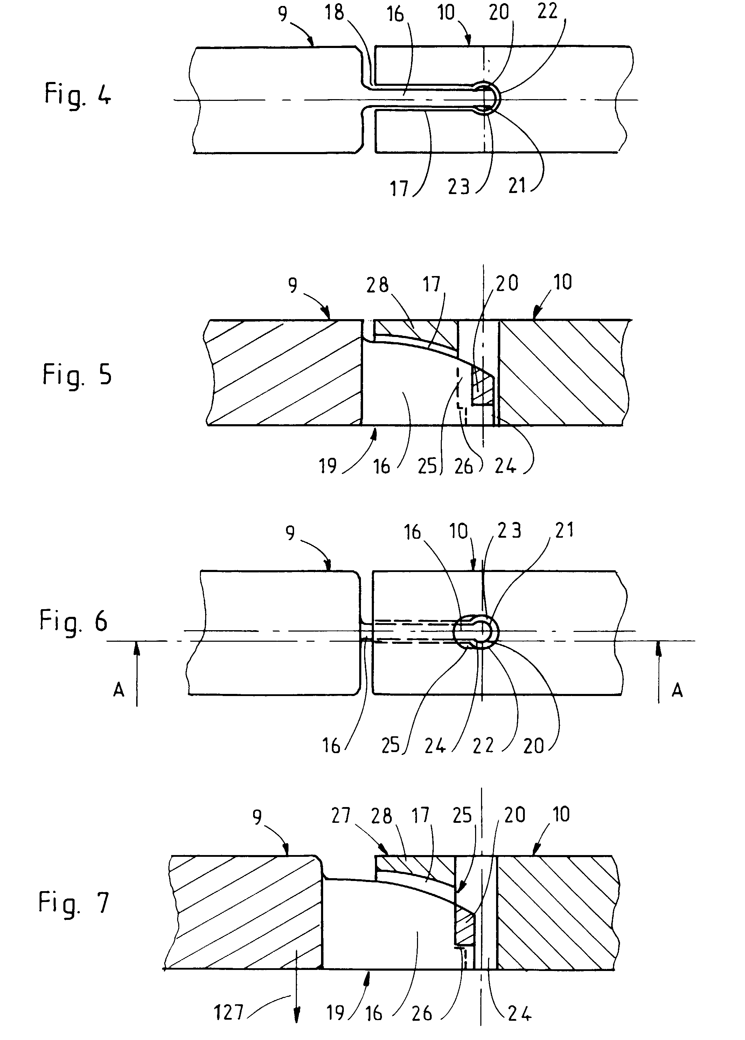

Dans le mode de réalisation illustré sur les figures 4 à 7, la forme d'extrémité mâle 9 comprend une portion d'extrémité 16 d'épaisseur réduite s'engageant dans une forme d'extrémité femelle 10 munie d'une fente 17 ouverte à l'extrémité 18 et sur une face frontale 19 de pénétration. La fente 17 permet ainsi le passage de la portion d'extrémité d'épaisseur réduite 16 de la forme d'extrémité mâle 9, pour le pivotement du doigt 5 par rapport au corps 1.

La forme d'extrémité mâle 9 comprend, sur sa portion d'extrémité d'épaisseur réduite 16, deux protubérances latérales 20 et 21 opposées se développant latéralement de part et d'autre dans des directions sensiblement perpendiculaires au plan de pivotement du doigt, c'est-à-dire parallèles à l'axe transversal 7, et s'engageant dans deux logements latéraux opposés respectifs 22 et 23 ménagés dans les faces latérales de la fente 17 de la forme d'extrémité femelle 10. Chacun des logements 22 ou 23 est conformé avec une portion radiale 24 pour autoriser le passage de la protubérance latérale correspondante 20 ou 21 lors du mouvement relatif de pivotement du doigt 5 par rapport au corps 1 en l'absence d'une traction axiale sur le corps 1.

Chacun des logements 22 et 23 est en outre conformé avec une portion axiale 25, pour autoriser un léger déplacement axial de la protubérance latérale correspondante 20 ou 21 lors d'une déformation sous contrainte de traction axiale du corps 1 de mousqueton, et pour limiter le déplacement axial au-dessous d'une valeur maximale déterminée. Ainsi, la figure 5 illustre les éléments en l'absence d'une traction axiale sur le corps 1 de mousqueton : la protubérance latérale 20 est logée dans la portion radiale 24 du logement correspondant. Par contre, sur la figure 7, en présence d'une traction axiale sur le corps 1 de mousqueton, les formes d'extrémité 9 et 10 se sont légèrement écartées axialement l'une de l'autre, et la protubérance latérale 20 s'engage dans la portion axiale 25 du logement correspondant, et vient en butée contre le fond de ladite portion axiale 25 qui limite son déplacement relatif axial.

En outre, chacun des logements 22 et 23 est conformé pour interdire le déplacement relatif radial de la protubérance latérale correspondante 20 ou 21 dans la direction d'ouverture du doigt lorsque le corps de mousqueton est déformé par une contrainte de traction axiale. Ainsi, la portion axiale 25 du logement 22 comprend un épaulement 26 qui, en position de traction axiale illustrée sur la figure 7, interdit le mouvement relatif de la forme d'extrémité mâle 9 à l'écart de la forme d'extrémité femelle 10 dans le sens d'ouverture du doigt illustré par la flèche 127.

Dans ce mode de réalisation des figures 4 à 7, la portion radiale 24 des logements 22 et 23 est formée d'un simple alésage radial traversant. La portion axiale 25 des logements 22 et 23 est formée par ovalisation de la partie externe de l'alésage traversant formant la portion radiale 24, par exemple par déplacement de l'outil de perçage engagé partiellement dans la fente 17.

On notera que la protubérance latérale 20 occupe une position centrale dans la profondeur de la fente 17, pour s'engager sur l'épaulement 26.

La forme d'extrémité femelle 10 comporte une portion transversale pleine 28 formant butée, obturant la fente 17 du côté de la face frontale externe 27 opposée à la face de pénétration 19, la portion transversale pleine 28 empêchant la progression de la forme d'extrémité mâle 9 au-delà de la position fermée.

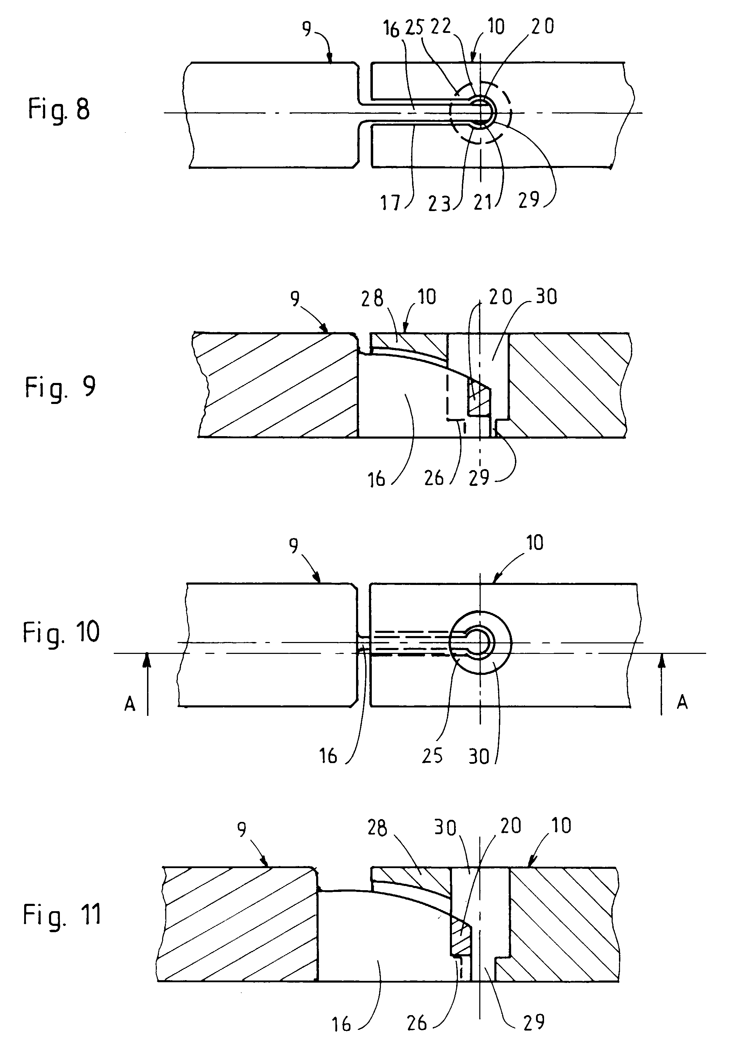

Le mode de réalisation des figures 8 à 11 reprend sensiblement les mêmes éléments que le mode de réalisation des figures 4 à 7, et ces éléments sont repérés par les mêmes références numériques.

On retrouve en particulier les protubérances latérales 20 et 21 de la forme d'extrémité mâle 9 engagées dans les logements 22 et 23 de la forme d'extrémité femelle 10 à fente 17.

La différence par rapport au mode de réalisation précédent réside dans la constitution des logements 22 et 23 : dans ce cas, les logements sont formés d'une suite de deux alésages coaxiaux, un premier alésage à diamètre réduit 29 et un second alésage à diamètre plus important 30, raccordés l'un à l'autre selon l'épaulement 26.

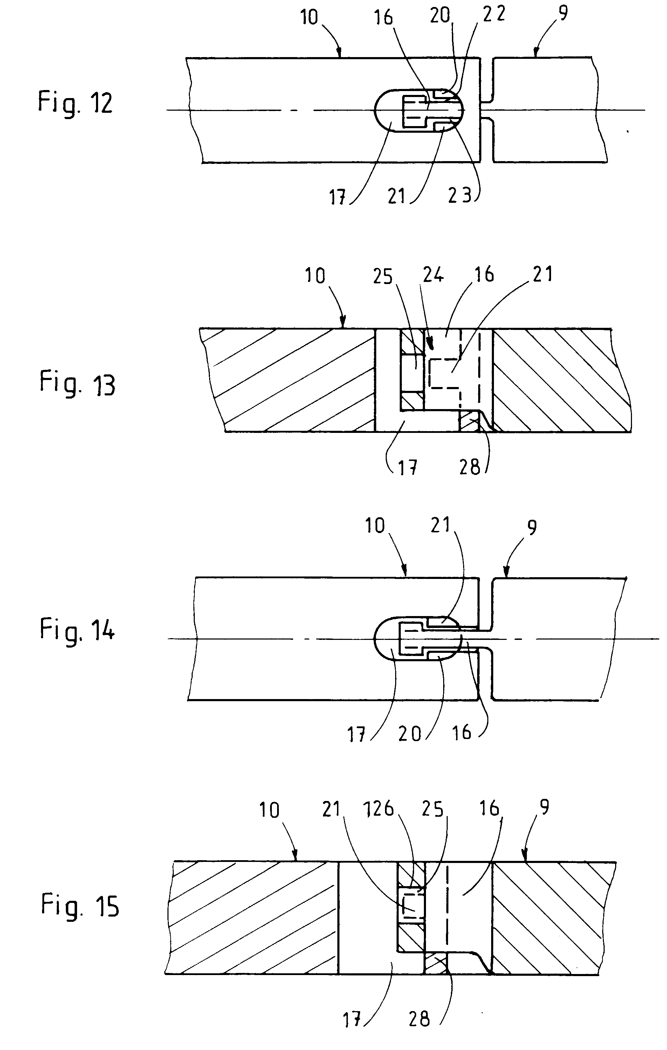

Les figures 12 à 15 illustrent un autre mode de réalisation dans lequel les protubérances latérales sont ménagées dans la forme d'extrémité femelle 10. On retrouve les principaux éléments des modes de réalisation précédents, ou leurs équivalents, repérés par les mêmes références numériques, et notamment la partie d'épaisseur réduite 16 de la forme d'extrémité mâle 9, et la fente 17 de la forme d'extrémité femelle 10. La fente comporte une portion transversale pleine 28 limitant la course relative du doigt au-delà de la position fermée.

Dans ce mode de réalisation, les protubérances latérales 20 et 21 sont ménagées sur les faces latérales de la fente 17 de la forme d'extrémité femelle 10, et elles s'engagent dans des logements latéraux correspondants 22 et 23 prévus sur les faces latérales de la portion d'extrémité d'épaisseur réduite 16 de forme d'extrémité mâle 9. Les logements latéraux 22 et 23 comportent une partie radiale autorisant le déplacement relatif radial des protubérances latérales 20 et 21 pour le mouvement relatif de pivotement du doigt 5 par rapport au corps 1. Par exemple, on retrouve la partie radiale 24 de logement.

En outre, les logements 22 et 23 comportent une portion axiale 25, autorisant le déplacement relatif axial des protubérances 20 et 21 lors d'une traction axiale sur le mousqueton. En position de traction, telle qu'illustrée sur la figure 15, la protubérance latérale 21 s'engage dans la portion axiale 25 du logement correspondant, et bute contre un épaulement 126 qui interdit alors l'ouverture du doigt en assurant la même fonction que l'épaulement 26 des modes de réalisation précédents.

Dans les modes de réalisation des figures 4 à 11, dans lesquels les protubérances latérales 20 et 21 sont ménagées sur la forme d'extrémité mâle, ces protubérances latérales 20 et 21 ont une profondeur réduite, de préférence inférieure au dixième du diamètre de section transversale du corps 1 de mousqueton. On évite ainsi la présence de protubérances trop agressives susceptibles d'accrocher une sangle, une corde ou les doigts de l'utilisateur lors de la manoeuvre du mousqueton.

Dans tous les modes de réalisation, le mousqueton selon l'invention est dépourvu de toute partie agressive en forme de crochet.

La présente invention n'est pas limitée aux modes de réalisation qui ont été explicitement décrits, mais elle en inclut les diverses variantes et généralisations contenues dans le domaine des revendications ci-après.

## Revendications

1. Mousqueton pour la pratique de l'alpinisme, de la spéléologie ou d'autres activités similaires, comprenant :
- un corps (1) ayant la forme générale d'un C dont les deux extrémités (2, 3) sont recourbées l'une vers l'autre et séparées par un espace d'ouverture (4),
- un doigt (5) dont une première extrémité (6) est articulée sur une première extrémité (2) du corps (1) selon un axe transversal (7), pour pivoter dans un plan de pivotement entre une position ouverte et une position fermée dans laquelle la seconde extrémité (8) du doigt (5) s'engage sur la seconde extrémité (3) du corps (1) pour fermer l'espace d'ouverture (4),
- les secondes extrémités respectives (3, 8) du corps (1) et du doigt (5) étant conformées selon des formes complémentaires, respectivement une forme d'extrémité mâle (9) et une forme d'extrémité femelle (10), conformées pour s'encastrer l'une dans l'autre en fin de mouvement de fermeture dans le plan de pivotement,
- la première des formes d'extrémité (9, 10) comprenant au moins une protubérance latérale (20, 21), se développant latéralement dans une direction sensiblement perpendiculaire au plan de pivotement du doigt (5), et s'engageant dans un logement latéral (22, 23) de la seconde des formes d'extrémité (9, 10),
- ledit logement latéral (22, 23) étant conformé pour autoriser le libre déplacement relatif radial de la protubérance latérale correspondante (20, 21) lors du mouvement relatif de pivotement du doigt (5) en l'absence de contrainte axiale appliquée sur le mousqueton et pour limiter au dessous d'une valeur maximale prédéterminée le déplacement axial relatif de la protubérance latérale correspondante (20, 21) lors d'une déformation sous contrainte de traction axiale du corps de mousqueton (1),
caractérisé en ce que :
- ledit logement latéral (22, 23) est conformé pour autoriser un léger déplacement axial relatif de la protubérance latérale correspondante (20, 21) lors d'une déformation sous contrainte de traction axiale du corps de mousqueton (1), et est conformé pour interdire le déplacement relatif radial de la protubérance latérale correspondante (20, 21) dans la direction d'ouverture du doigt (5) lorsque la protubérance latérale correspondante (20, 21) s'est déplacée selon ledit léger déplacement axial relatif sous l'effet de la contrainte de traction axiale appliquée au corps de mousqueton (1).

2. Mousqueton selon la revendication 1, caractérisé en ce que la protubérance latérale (20, 21) est ménagée sur la forme d'extrémité mâle (9), et s'engage dans un logement correspondant (22, 23) ménagé dans la forme d'extrémité femelle (10).

3. Mousqueton selon la revendication 2, caractérisé en ce que la protubérance latérale (20, 21) a une profondeur réduite, inférieure au dixième du diamètre de section transversale du corps de mousqueton (1).

4. Mousqueton selon la revendication 1, caractérisé en ce que la protubérance latérale (20, 21) est ménagée dans la forme d'extrémité femelle (10), et s'engage dans un logement (22, 23) correspondant ménagé sur la forme d'extrémité mâle (9).

5. Mousqueton selon l'une quelconque des revendications 1 à 4, caractérisé en ce que ladite première des formes d'extrémité (9, 10) comprend deux protubérances latérales opposées (20, 21), se développant latéralement de part et d'autre et s'engageant dans deux logements latéraux opposés (22, 23) de la seconde des formes d'extrémité (9, 10).

6. Mousqueton selon l'une quelconque des revendications 1 à 5, caractérisé en ce que la forme d'extrémité femelle (10) comporte une portion transversale (28) formant butée, limitant la progression de la forme d'extrémité mâle (9) au-delà de la position fermée.

7. Mousqueton selon l'une quelconque des revendications 1 à 6, caractérisé en ce que la forme d'extrémité femelle (10) est une fente (17) ouverte à l'extrémité (18) et sur une face frontale (19) de pénétration, pour le passage de la forme d'extrémité mâle (9) lors du mouvement de pivotement du doigt (5).

8. Mousqueton selon l'une quelconque des revendications 1 à 7, caractérisé en ce que le doigt (5) est rappelé en position fermée par des moyens élastiques.

## Patentansprüche

1. Karabinerhaken für den Einsatz beim Bergsteigen, in der Höhlenforschung oder bei ähnlichen Aktivitäten, umfassend:
- einen Körper (1) in Form eines C, dessen beide Enden (2, 3) aufeinander zuweisend gekrümmt und durch einen Öffnungsabstand (4) voneinander getrennt sind,
- einen Finger (5), von dem ein erstes Ende (6) an einem ersten Ende (2) des Körpers (1) über eine quer verlaufende Achse (7) so angelenkt ist, daß er in einer Schwenkebene zwischen einer Öffnungsstellung und einer Schließstellung verschwenkbar ist, in welcher das zweite Ende (8) des Fingers (5) in Eingriff mit dem zweiten Ende (3) des Körpers (1) kommt, um den Öffnungsabstand (4) zu überbrücken,
- wobei die jeweiligen zweiten Enden (3, 8) des Körpers (1) bzw. des Fingers (5) einander ergänzende Formen haben, nämlich eine männliche Endform (9) und eine weibliche Endform (10), die so ausgebildet sind, daß sie am Ende der Schließbewegung in der Schwenkebene ineinander eingreifen,
- wobei die erste der Endformen (9, 10) wenigstens einen seitlichen Vorsprung (20, 21) aufweist, der sich in einer zur Schwenkebene des Fingers (5) im wesentlichen rechtwinkligen Richtung zur Seite hin erstreckt und in einen seitlichen Sitz (22, 23) der zweiten Endform (9, 10) eingreift,
- wobei der seitliche Sitz (22, 23) so ausgebildet ist, daß er eine freie radiale Relativbewegung des entsprechenden seitlichen Vorsprungs (20, 21) bei der Schwenkbewegung des Fingers (5) erlaubt, wenn auf den Karabinerhaken keine Axialbelastung einwirkt, und daß er die axiale Relativbewegung des zugehörigen seitlichen Vorsprungs (20, 21) bei einer Verformung aufgrund einer axialen Zugbelastung des Karabinerhakenkörpers (1) auf einen vorbestimmten Maximalwert begrenzt,
dadurch gekennzeichnet, daß :
- der seitliche Sitz (22, 23) so ausgebildet ist, daß er eine leichte axiale Relativbewegung des zugehörigen seitlichen Vorsprungs (20, 21) bei einer Verformung des Karabinerhakenkörpers (1) aufgrung einer auf diesen einwirkenden axialen Zugkraft erlaubt, während er eine radiale Relativbewegung des zugehörigen seitlichen Vorsprungs (20, 21) in der Öffnungsrichtung des Fingers (5) nicht zuläßt, wenn der zugehörige seitliche Vorsprung (20, 21) die leichte axiale Relativbewegung unter Einwirkung der am Karabinerhakenkörper (1) angreifenden axialen Zugkraft durchgeführt hat.

2. Karabinerhaken nach Anspruch 1, dadurch gekennzeichnet, daß der seitliche Vorsprung (20, 21) an der männlichen Endform (9) ausgebildet ist,und in den entsprechenden Sitz (22, 23) eingreift, der in die weibliche Endform (10) eingearbeitet ist.

3. Karabinerhaken nach Anspruch 2, dadurch gekennzeichnet, daß der seitliche Vorsprung (20, 21) eine reduzierte Breite hat, die kleiner als ein Zehntel des Durchmessers des Querschnittsprofils des Karabinerhakenkörpers (1) ist.

4. Karabinerhaken nach Anspruch 1, dadurch gekennzeichnet, daß der seitliche Vorsprung (20, 21) an der weiblichen Endform (10) ausgebildet ist, und in den entsprechenden Sitz (22, 23) eingreift, der in die männliche Endform (9) eingearbeitet ist.

5. Karabinerhaken nach einem der Ansprüche 1 bis 4, dadurch gekennzeichnet, daß die erste der Endformen (9, 10) zwei gegenüberliegende seitliche Vorsprünge (20, 21) hat, die sich jeweils zur Seite hin erstrecken und in zwei gegenüberliegende seitliche Sitze (22, 23) der zweiten der Endformen (9, 10) eingreifen.

6. Karabinerhaken nach einem der Ansprüche 1 bis 5, dadurch gekennzeichnet, daß die weibliche Endform (10) einen sich quer erstreckenden Bereich (28) hat, der einen Anschlag zur Begrenzung der Bewegung der männlichen Endform (9) über die Schließstellung hinaus bildet.

7. Karabinerhaken nach einem der Ansprüche 1 bis 6, dadurch gekennzeichnet, daß die weibliche Endform (10) einen am Ende (18) und an einer Einschubseite (19) offenen Schlitz (17) für den Eingriff der männlichen Endform (9) bei der Schwenkbewegung des Fingers (5) aufweist.

8. Karabinerhaken nach einem der Ansprüche 1 bis 7, dadurch gekennzeichnet, daß der Finger (5) durch elastische Mittel in die Schließstellung zurückgeführt wird.

## Claims

1. Snap hook for climbing, potholing and other similar activities, comprising :
- a generally C-shaped body (1) the two ends (2, 3) of which are curved towards each other and separated by an opening gap (4),
- a finger (5) having a first end (6) articulated to a first end (2) of said body (1) about a transverse axis (7), to pivot in a pivoting plane between an open position and a closed position in which the second end (8) of the finger (5) engages with the second end (3) of the body (1) to close the opening gap (4),
- the respective second ends (3, 8) of the body (1) and the finger (5) being shaped complementarily, respectively with a male end shape (9) and a female end shape (10), adapted to fit one within the other at the end of closing movement in the pivoting plane,
- the first of said end shapes (9, 10) having at least one lateral protuberance (20, 21) developing laterally in a direction substantially perpendicular to said pivoting plane of said finger (5), and engaging in a lateral housing (22, 23) of the second of said end shapes (9, 10),
- said lateral housing (22, 23) being shaped to allow unrestricted radial relative displacement of the corresponding lateral protuberance (20, 21) on pivoting relative movement of the finger (5) with no axial load applied to said snap hook and to restrict to below a predetermined maximal value axial relative displacement of the corresponding lateral protuberance (20, 21) on deformation of the snap hook body (1) under axial traction load,
characterised in that :
- said lateral housing (22, 23) is shaped to allow slight axial relative displacement of the corresponding lateral protuberance (20, 21) upon deformation of the snap hook body (1) under axial traction load, and to prevent radial relative displacement of the corresponding lateral protuberance (20, 21) in the direction of opening of the finger (5) if the corresponding lateral protuberance (20, 21) has moved to the extent of said slight axial relative displacement due to said axial traction load applied to said snap hook body (1).

2. Snap hook according to claim 1, characterised in that the lateral protuberance (20, 21) is on said male end shape (9), and engages in a corresponding housing (22, 23) in the female end shape (10).

3. Snap hook according to claim 2, characterised in that the lateral protuberance (20, 21) has a shallow depth, less than one tenth the diameter of the transverse cross-section of said snap hook body (1).

4. Snap hook according to claim 1, characterised in that the lateral protuberance (20, 21) is formed in said female end shape (10), and engages in a corresponding housing (22, 23) formed on the male end shape (9).

5. Snap hook according to any of claims 1 to 4, characterised in that said first end shape (9, 10) comprises two opposed lateral protuberances (20, 21) developing laterally on both sides and engaging in opposed lateral housings (22, 23) of the second end shape (9, 10).

6. Snap hook according to any one of claims 1 to 5, characterised in that the female end shape (10) includes a transverse portion (28) forming an abutment, limiting progression of the male end shape (9) beyong the closed position.

7. Snap hook according to any one of claims 1 to 6, characterised in that the female end shape (10) is a slot (17) open at the end (18) and on a front penetration face (19) to allow the male end shape (9) to pass through it upon pivoting movement of the finger (5).

8. Snap hook according to any one of claims 1 to 7, characterised in that the finger (5) is spring-loaded into its closed position by spring means.
